(19) Europäisches Patentamt
European Patent Office
Office européen des brevets

(11) **EP 4 657 390 A1**

(12) **EUROPEAN PATENT APPLICATION**

(43) Date of publication:
**03.12.2025 Bulletin 2025/49**

(21) Application number: **24179134.2**

(22) Date of filing: **30.05.2024**

(51) International Patent Classification (IPC):
***G06V 10/82*** *(2022.01)*

(52) Cooperative Patent Classification (CPC):
**G06V 10/82;** G06V 20/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **TOYOTA JIDOSHA KABUSHIKI KAISHA Aichi-ken 471-8571 (JP)**
- **Max-Planck-Gesellschaft zur Förderung der Wissenschaften e.V. 80539 München (DE)**

(72) Inventors:
- **OLMEDA REINO, Daniel 1140 Brussels (BE)**
- **HU, Xinting 80539 Munich (DE)**
- **JIANG, Li 80539 Munich (DE)**
- **SCHIELE, Bernt 80539 Munich (DE)**

(74) Representative: **Cabinet Beau de Loménie 103, rue de Grenelle 75340 Paris Cedex 07 (FR)**

Remarks:
Amended claims in accordance with Rule 137(2) EPC.

(54) **A METHOD FOR TRAINING A TRANSFORMER MODEL FOR SEMI-SUPERVISED IMAGE SEGMENTATION**

(57) A method (20) for training a transformer model for semi-supervised image segmentation, the transformer model comprising a teacher model (T) and a student model (S), the method comprising:
- obtaining a dataset of unlabeled images ($D^u$) and inputting each unlabeled image into the teacher model (T) with a weak augmentation and into the student model (S) with a stronger augmentation;
- generating a pseudo-label for the strongly augmented unlabeled image based on the weakly augmented unlabeled image using the teacher model (T), and using the pseudo-label to train the student model (S) comprising a self-attention mechanism incorporating a feature perturbation; and
- aligning output of the student model (S) with the pseudo-label.

**FIG.2**

EP 4 657 390 A1

**Description**

BACKGROUND OF THE INVENTION

1. Field of the invention

The present disclosure relates to the field of machine learning, specifically focusing on computer vision and image processing. In particular, the invention relates to a method and an apparatus for training a transformer model for semi-supervised image segmentation.

2. Description of Related Art

Image segmentation plays an important role in various domains such as automotive traffic management, medical imaging, and satellite imagery analysis. This process involves partitioning images into meaningful segments to facilitate tasks like object detection, tracking, and analysis. For example, in automotive traffic management, segmentation aids in detecting vehicles, pedestrians, and road markings, essential for tasks like autonomous driving and traffic flow optimization.

Semi-supervised image segmentation techniques offer a promising solution to improve the efficiency and accuracy of segmentation tasks by utilizing both labeled and unlabeled data. These techniques leverage a smaller set of labeled data to guide the segmentation process, while incorporating information from unlabeled data to refine segmentation boundaries. Commonly, semi-supervised image segmentation techniques adopt a teacher-student paradigm, where pseudo-labels generated from weakly augmented labeled images guide the training process of strongly augmented counterparts. This approach reduces the need for extensive manual annotation efforts while enhancing segmentation quality, particularly beneficial in scenarios where acquiring large labeled datasets is impractical or expensive. For instance, Convolutional Neural Networks (ConvNets) are commonly used as the backbone architecture to perform this segmentation technique and are widely adopted for semantic segmentation due to their ability to capture spatial dependencies and extract meaningful features from images.

More specifically, in the realm of advanced driver assistance systems (ADAS), ConvNets are widely deployed for tasks such as object, lane and pedestrian recognition. However, as ADAS tasks increase and the demand for higher accuracy grows, ConvNet-based approaches encounter diminishing returns in performance.

In fact, one significant issue with ConvNets in ADAS is their limited ability to capture long-range dependencies and global context in images. ADAS tasks often require understanding the entire scene and context, which may involve objects at different distances and orientations. ConvNets, while effective at capturing local features through convolutional operations, struggle to incorporate global context effectively. This limitation leads to inaccuracies in tasks such as object recognition, especially in scenarios with complex or cluttered environments.

Moreover, ConvNets typically require a large amount of labeled data for training to achieve high performance. Obtaining such labeled data can be challenging and expensive, especially for rare or unusual driving scenarios. This scarcity of labeled data may hinder the ability of ConvNet-based models to generalize well across diverse driving conditions, leading to suboptimal performance and potentially compromising safety in real-world applications.

Thus, there is a need to explore other approaches that offer better scalability and performance for image segmentation and more particularly in semantic segmentation.

SUMMARY

The object of the present invention is to at least substantially remedy the above-mentioned drawbacks.

In this respect, the present invention relates to a method for training a transformer model for semi-supervised image segmentation, the transformer model comprising a teacher model and a student model, the method comprising:

- obtaining a dataset of unlabeled images and inputting each unlabeled image into the teacher model with a weak augmentation and into the student model with a stronger augmentation;
- generating a pseudo-label for the strongly augmented unlabeled image based on the weakly augmented unlabeled image using the teacher model, and using the pseudo-label to train the student model comprising a self-attention mechanism incorporating a feature perturbation; and
- aligning output of the student model with the pseudo-label.

For conciseness, the method is referred to hereinafter as the training method. Further, as used herein and unless the context indicates otherwise, "a", "an", and "the" are intended to refer to "at least one" or "each" and to include plural forms as well.

Transformers are a class of neural network architectures initially introduced for natural language processing tasks. The architecture of a transformer is well-known and comprises multiple layers, each incorporating self-attention and feed-forward neural network modules. In the self-attention module, the model computes attention scores between all pairs of input tokens, i.e. elements of an input sequence, allowing it to focus on relevant parts of the input while aggregating information from distant tokens. The resulting attended features are then passed through a feed-forward neural network, which applies non-linear transformations to the features before passing them to the next layer. Thus, by representing sequences as tokens and leveraging self-attention mechanisms, transformers can capture complex relationships and dependencies within input sequences, making them capable of handling long-range dependencies.

Accordingly, such transformers are more efficient than ConvNets across various computer vision domains, including image segmentation and notably semantic image segmentation and other high-level vision tasks. For instance, ConvNets, which process images using convolutions applied to pixel grids, transformers operate on sequences of fixed-size image patches which make the transformer handle images of arbitrary size and scale while maintaining computational efficiency. In addition, unlike traditional recurrent or convolutional neural networks, transformers rely on self-attention mechanisms, as described above, to capture long-range dependencies within input sequences, making them highly effective for tasks requiring understanding of sequential data.

Thus, following the steps of the aforementioned method (may correspond to a computer-implemented method) which involves the use of a transformer, offers better scalability and performance for image segmentation and particularly in semantic segmentation.

As a matter of fact, the method comprises acquiring a dataset of unlabeled images. Each unlabeled image is then fed into two models: the teacher model and the student model. Of course, it is well-known that each of the teacher model and the student model comprise a transformer-based encoder and a decoder for generating segmentation outputs.

The unlabeled image undergoes a weak augmentation process before being inputted into the teacher model. Simultaneously, the same unlabeled image undergoes a stronger augmentation process before being inputted into the student mode.

After inputting the weakly and strongly augmented unlabeled images into the teacher and student models respectively, the teacher model generates a pseudo-label for the strongly augmented unlabeled image based on the weakly augmented unlabeled image. This pseudo-label serves as the ground truth for the strongly augmented image. The student model, comprising a self-attention mechanism and incorporating a feature perturbation, is then trained using this pseudo-label. This training enhances the student model's ability to understand and classify the features within the image.

Finally, the output generated by the student model is aligned with the pseudo-label generated by the teacher model. This alignment ensures that the student model's predictions correspond closely to the pseudo-label, thereby improving the overall accuracy and reliability of the segmentation process.

Optionally, the method comprises verifying the image segmentation of the transformer by using a labeled dataset.

The step of verifying the image segmentation involves evaluating the performance of the transformer in segmenting images by comparing its predicted segmentation masks with the ground truth annotations provided in a labeled dataset. This comparison assesses the accuracy, precision, and overall quality of the transformer model's segmentation outputs, and then provides insights into areas where the transformer model performs well and areas where it may need improvement. Accordingly, the transformer model can be iteratively fine-tuned and its hyper-parameters adjusted.

Optionally, wherein each unlabeled image is strongly augmented by modifying the spatial arrangement of its patches.

Strong augmentation involves applying significant (aggressive) transformations to the image patches to introduce variations and perturbations. The purpose of such strong augmentation is to increase the diversity and complexity of the unlabeled image. By introducing variations in the spatial arrangement (shuffling) of the patches, the student transformer model is exposed to a wider range of image configurations, enhancing its ability to generalize and perform well on unseen data. In particular, by processing shuffled patches, the encoder of the student model can capture spatial relationships and dependencies in a more comprehensive manner.

Moreover, the effectiveness of shuffling the patches is further enhanced when combined with additional augmentation strategies such as CutMix which mixes patches from different images, thereby introducing additional variations and complexities. By integrating CutMix to the strong augmentation, the student model benefits from an increased diversity of transformations.

Following this encoding process, the features embeddings derived from the shuffled patches may be shuffled back to their original sequence before being passed to the decoder of the student model. This reshuffling step is advantageous as preserving the original sequence ensures that the decoder can reconstruct the spatial layout of the features accurately, facilitating the generation of high-quality segmentation masks. In addition, the shuffling back of feature is particularly advantageous when aligning outputs of the student model with the pseudo-label. Since the pseudo-labels are derived from unshuffled images, maintaining consistency in feature alignment is advantageous for accurate comparison and evaluation.

Optionally, the patches are randomly spatially rearranged.

In other words, the spatial arrangement of the patches is altered in an unpredictable manner which helps preventing the transformer model from memorizing specific spatial patterns and encourages it to learn more generalizable representations.

Optionally, the feature perturbation comprises modifying the student model's attention weights for patches of the strongly augmented unlabeled image with a confidence below a predetermined threshold.

Adjustments are made to the attention weights of the student model concerning the patches of the strongly augmented unlabeled image. These adjustments are triggered when the confidence level associated with a patch falls below the predetermined threshold. The confidence threshold serves as a criterion to identify patches where the transformer model's certainty in its predictions is diminished. For such patches, the attention weights assigned by the student model are modified, aiming to increase self-attention's model and mutual attention other low-confidence patches (below the predetermined threshold).

Optionally, the predetermined threshold is set between 0 and 1.

Optionally, the predetermined threshold is set to 0.95.

Such predetermined threshold value may be determined as the one that maximizes the accuracy on a validation dataset.

Optionally, aligning the output of the student model with the pseudo-label comprises processing a consistency loss function.

The consistency loss function calculates the discrepancy between the predictions (outputs) generated by the student model and the pseudo-label derived from the weakly augmented unlabeled image. By quantifying this inconsistency, the consistency loss function provides a measure of how closely the student model's output aligns with the pseudo-label. Accordingly, the aligning step ensures that the student model generates segmentation outputs that are in accordance with the provided pseudo-labels, enhancing its effectiveness in capturing meaningful information from the input image.

Optionally, the consistency loss function is a cross entropy loss or is based on a normalized distribution of negative class probabilities from both the teacher and the student model.

The consistency loss function can be implemented in multiple ways. If the consistency loss function is a cross-entropy loss, the consistency loss function computes the cross-entropy loss between the predicted probability distributions of the student model and the pseudo-label derived from the teacher model. This loss function penalizes deviations from the ground truth labels and encourages the student model to produce predictions that align closely with the teacher's predictions.

Alternatively, the consistency loss function may be based on the normalized distribution of negative class probabilities from both the teacher and the student model. This involves comparing the probabilities assigned to the negative class by both models and penalizing discrepancies between them. Accordingly, normalization ensures that the probabilities are scaled appropriately and facilitate the comparison between the two distributions.

It should be noted that the term "negative class probabilities" refers to the probability assigned to all the classes that are not the pseudo-label (known as the positive class). It should also be noted that the person skilled in the art knows that the choice of the consistency loss function depends on the specific requirements of the task and the desired behavior of the models. Each alternative has its advantages and may be suitable for different scenarios.

Optionally, the normalized distribution is calculated by applying a softmax function over logits of all the negative classes from each model.

Optionally, the consistency loss reflects the distance between the normalized distribution of negative class probabilities from the teacher model and the normalized distribution of negative class probabilities from the student model.

Optionally, the transformer model is a vision transformer or a swin transformer.

The present invention further relates to a computer program set including instructions for executing the steps of the above-described method when said program set is executed by one computer.

This program set can use any programming language and take the form of source code, object code, or a code intermediate between source code and object code, such as a partially compiled form or any other desirable form.

The present invention further relates to an apparatus for training a transformer model for semi-supervised image segmentation, the transformer model comprising a teacher model and a student model, the apparatus comprising:

- an obtaining module configured to obtain a dataset of unlabeled images;
- an inputting module configured to input each unlabeled image into the teacher model with a weak augmentation and into the student model with a stronger augmentation;
- a generating module configured to generate a pseudo-label for the strongly augmented unlabeled image based on the weakly augmented unlabeled image using the teacher model;
- a training module configured to use the pseudo-label to train the student model comprising a self-attention mechanism incorporating a feature perturbation; and

- an aligning module configured to align output of the student model with the pseudo-label.

The apparatus referred to hereinafter as the training apparatus, may be configured to carry out the above-mentioned training method and may have part of all of the above-described features. For instance, at least one of said modules (one or more modules among these modules) is located on a cloud which typically refers to a network of remote servers accessed over the internet to store, manage and process data rather than on a local server or personal computer. Accordingly, one specific module or a plurality of modules of the training apparatus is hosted or operated within the cloud rather than residing on a local server. It means that the functions or operation of the or these module(s) are carried out using cloud-based resources or services.

Of course, the training apparatus may have a hardware structure of a computer which refers to the physical components and architecture that make up the computer system. These components include for example the central processing unit (CPU) and memory modules (such as RAM for "Random-Access Memory").

The present invention further relates to a vehicle comprising the above-described apparatus.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a block diagram of a training apparatus according to an embodiment of the present invention; and
- FIG. 2 is a flowchart of a training method according to an embodiment of the present invention.

DETAILED DESCRIPTION OF EMBODIMENTS

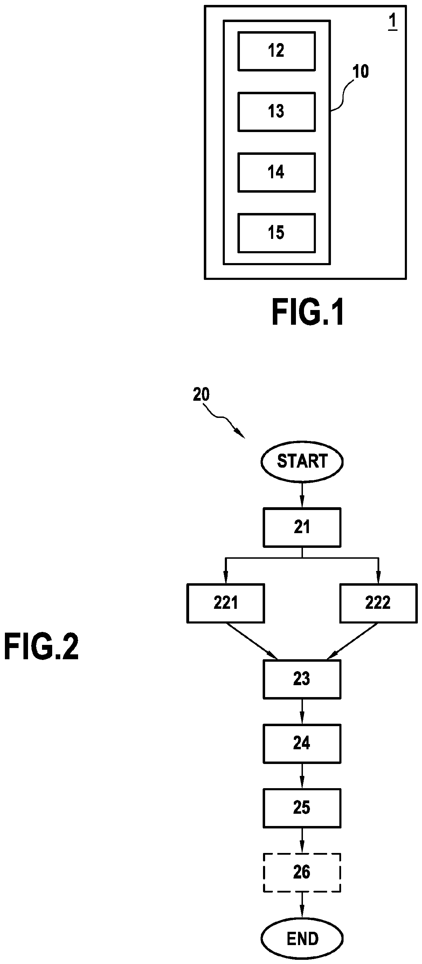

Figure 1 shows a block diagram of a training apparatus 10 comprising an obtaining module 11, an inputting module 12, a generating module 13, a training module 14, and an aligning module 15 according to embodiments of the present invention. The training apparatus 10 may be located inside or outside a vehicle 1. The vehicle 1 may be directed to an apparatus capable of transporting people or objects from one location to another, such as a car or a motorcycle, and may be categorized into different levels based on the extent of automation.

Alternatively or additionally, one module or a plurality of modules among the modules of the training apparatus 10 may be hosted or operated within a cloud (extern server) rather than residing on a local server.

The training apparatus 10 may be configured to training a transformer model (a vision transformer or a swin transformer) as such transformers are more efficient than ConvNets in image segmentation and notably semantic image segmentation and other high-level vision tasks as describe above. However, despite its advantages over traditional ConvNets, transformers are not fully leveraging their strengths and capabilities in image segmentation. Accordingly, the training apparatus 10 is designed to address this limitation by enabling the transformer to exploit its features and advantages more effectively. In other words, the training apparatus 10 aims to maximize the transformer's performance and efficiency in image segmentation tasks through efficient training.

To this end, the training apparatus 10 comprises two distinct components: a teacher model T and a student model S. The teacher model T serves as a reference or a guide for the training process. It is typically a more complex and well-established model that has been pre-trained on a large dataset. The teacher model T comprises extensive knowledge and expertise in the task at hand, allowing it to provide guidance to the student model S during the training. On the other hand, the student model S is the primary focus of the training process. It is a simpler and more lightweight version of the teacher model T, designed to learn for the guidance provided by the teacher model T. The student model S undergoes iterative training sessions where it attempts to mimic the behavior and predictions of the teacher model T. Such collaborative learning approach is thus particularly advantageous in semi-supervised settings, where labeled data is limited, as it allows the student model S to learn from both labeled and unlabeled examples with the guidance of the teacher model T.

Of course, it is well-known that each of the teacher model T and the student model S comprise a transformer-based encoder and a decoder for generating segmentation outputs.

The student model's S parameters $\theta^S$ are updated using all images of a training dataset D, while the teacher model's T parameters $\theta^T$ evolve via exponential moving average (EMA) based on the student's parameters:

$$\theta_t^T = \mu \cdot \theta_{t-1}^T + (1 - \mu) \cdot \theta_t^S \quad (1)$$

Here, t is the iteration index, and $\mu$ is a momentum decay factor dictating the teacher model's update rate. When $\mu$ = 0, it implies direct copying of parameters from the student model S.

The training apparatus 10 may comprise an electronic circuit, a processor (shared, dedicated, or group), a combinational logic circuit, a memory that executes one or more software programs, and/or other suitable components that provide the described functionality. In other words, the training apparatus 10 may be connected to a memory, which may store data, e.g. at least one computer program, which, when executed, carries out the training method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk. Alternatively, the memory can be integrated circuit in which the program is incorporated, the circuit being adapted to execute the training method or to be used in its execution.

The obtaining module 11 is a module configured to obtain a dataset $D^u$ of unlabeled images which is part, with labeled dataset $D^L$ of the training dataset D. Accordingly, the obtaining module 11 is configured to gather a collection of images that are not associated with ground truth labels.

The obtaining module 11 may be implemented as software running on the training apparatus 10 or may be implemented partially or fully as a hardware element of the training apparatus 10.

The inputting module 12 is a module configured to input each unlabeled image $x^T$ from the unlabeled dataset $D^u$ into the teacher model T with a weak augmentation. For instance, the weak augmentation may be a simple transformation such as cropping and resizing. The purpose of the weak augmentation is to introduce variability and perturbation to the image $x^T$ while preserving its semantic content.

The inputting module 12 is further configured to input each unlabeled image $x^S$ into the student model S with a stronger augmentation by modifying the spatial arrangement of its patches, randomly for example. As described above, the strong augmentation involves applying significant (aggressive) transformations to the image patches to introduce variations and perturbations. The purpose of such strong augmentation is to increase the diversity and complexity of the unlabeled image $x^S$. By introducing variations in the spatial arrangement (shuffling) of the patches, the student transformer model S is exposed to a wider range of image configurations, enhancing its ability to generalize and perform well on unseen data. In particular, by processing shuffled patches, the encoder of the student model S can capture spatial relationships and dependencies in a more comprehensive manner.

Moreover, the effectiveness of shuffling the patches is further enhanced when combined with additional augmentation strategies such as CutMix which mixes patches from different images, thereby introducing additional variations and complexities. By integrating CutMix to the strong augmentation, the student model S benefits from an increased diversity of transformations.

For instance, the CutMix strategy is explained by document: Sangdoo Yn, Dongyoon Han, Seong Joon Oh, Sanghyuk Chun, Junsuk Choe, and Youngjoon Yoo. CutMix: Regularization Strategy to Train Strong Classifiers with Localizable Features. In Proceedings of the IEEE/CVF International Conference on Computer Vision (ICCV), 2019.

The inputting module 12 is then configured, following this encoding process, to perform a reshuffling step. In particular, the features embeddings derived from the shuffled patches may be shuffled back to their original sequence before being passed to the decoder of the student model S. This reshuffling step performed by the inputting module 12 is advantageous as preserving the original sequence ensures that the decoder can reconstruct the spatial layout of the features accurately, facilitating the generation of high-quality segmentation masks. In addition, the shuffling back of feature is particularly advantageous when aligning outputs of the student model S with the pseudo-label (known as positive class). Since the pseudo-labels are derived from unshuffled images $x^T$, maintaining consistency in feature alignment is advantageous for accurate comparison and evaluation.

The inputting module 12 may be implemented as software running on the training apparatus 10 or may be implemented partially or fully as hardware element of the training apparatus 10. In particular, the training apparatus 10 may comprise a program that includes both the obtaining module 11 and the inputting module 12. Alternatively and without limitation, the obtaining module 11 may be realized as independent program (in particular, beside a program forming the inputting module 12).

The generating module 13 is a module configured to generate a pseudo-label for the strongly augmented unlabeled image based on the weakly augmented unlabeled image using the teacher model T. This pseudo-label serves as the ground truth for the strongly augmented image.

The generating module 13 may be implemented as software running on the training apparatus 10 or may be implemented partially or fully as hardware element of the training apparatus 10. In particular, the training apparatus 10 may comprise a program that includes the obtaining module 11, the inputting module 12 and the generating module 13. Alternatively and without limitation, the generating module 13 may be realized as independent program (in particular, beside a program forming the inputting module 12 and the obtaining module 11).

The training module 14 is a module configured to use the pseudo-label to train the student model S comprising a self-attention mechanism incorporating a feature perturbation.

The feature perturbation comprises modifying the student model's attention weights for patches of the strongly augmented unlabeled image with a confidence below a predetermined threshold β. In other words, the training module 14 is configured to make adjustments to the attention weights of the student model S concerning the patches of the strongly augmented unlabeled image. As described above, these adjustments are triggered when the confidence level associated with a patch falls below the predetermined threshold β.

The predetermined threshold serves as a criterion to identify patches where the transformer model's certainty in its predictions is diminished. For such patches, the attention weights assigned by the student model S are modified by the training module 14.

For example, with *an L × L* grid of image patches, the self-attention mechanism refers to the following attention matrix:

$$\tilde{e} = \text{softmax}\left(M + (eW^Q)(eW^K)^T\right)(eW^V) \qquad (2)$$

wherein a self-attention layer operates on a sequence of $N = L^2$ input embeddings $e = [e_1, e_2, ... e_N]^T$, $e_i \in \mathbb{R}^d$, wherein projections $W^Q$, $W^K$, and $W^V \in \mathbb{R}^{d \times d'}$ are parameter matrices for queries, key, and values, respectively, and wherein d is the length of the embeddings. For conciseness, scaling, residual connections, and multi-head computations are omitted here but explained in document: Ashish Vaswani, Noam Shazeer, Niki Parmar, Jakob Uszkoreit, Llion Jones, Aidan NGomez, Lukasz Kaiser, and Illia Polosukhin. Attention is All you Need. In advances in Neural Information Processing Systems (NeurIPs), 2017.

*M* is an attention mask matrix $\in \mathbb{R}^{N \times N}$ at location (i, j), corresponding to:

$$M_{ij} = \begin{cases} 0 & \text{if } \overline{C}_i^T > \text{Median}(\overline{C}^T), \\ \alpha \cdot \left(1 - \overline{C}_j^T\right) & \text{otherwise.} \end{cases} \qquad (3)$$

Here, $\alpha > 0$ is a hyper-parameter, and Median() function means getting the medial value. $\overline{C}_i^T$ is the $i$th element of $\overline{C}^T$, which is obtained by patch-wise averaging a confidence map $C^T$ from the teacher model T.

For patches with $\overline{C}^T$ above the predetermined threshold β, their attention weights remain unchanged. In contrast, patch *i* with lower confidence $\overline{C}_i^T$ has its attention weights adjusted as a feature perturbation: $M_i$ increases its self-attention and mutual attention toward other low-confidence patches. As a result, the training module 14 reinforces the model's attentiveness towards less confident patches.

The predetermined threshold β may be set as an example between 1 and 0, preferably set to 0.95.

The predetermined threshold β can be determined by maximizing the accuracy on a validation dataset.

The training module 14 may be implemented as software running on the training apparatus 10 or may be implemented partially or fully as hardware element of the training apparatus 10. In particular, the training apparatus 10 may comprise a program that includes the obtaining module 11, the inputting module 12, the generating module 13 and the training module 14. Alternatively and without limitation, the training module 14 may be realized as independent program (in particular, beside a program forming the inputting module 12, the obtaining module 11 and the generating module 13).

The aligning module 15 is configured to align output of the student model S with the pseudo-label. For this purpose, the aligning module 15 is configured to perform a consistency loss function. Such consistency loss function may, as a first alternative, a cross entropy loss, or, as second alternative, based on a normalized distribution of negative class probabilities from both the teacher model T and the student model S.

If the consistency loss function is a cross-entropy loss (first alternative), the consistency loss function computes the cross-entropy loss between the predicted probability distributions of the student model and the pseudo-label derived from the teacher model. This loss function penalizes deviations from the ground truth labels and encourages the student model S to produce predictions that align closely with the teacher's predictions.

When the consistency loss function is based on the normalized distribution of the negative class probabilities from both the teacher model T and the student model S (second alternative), the consistency loss function involves comparing the probabilities assigned to the negative class by both models and penalizing discrepancies between them.

For instance, the consistency loss $\mathcal{L}_{NCR}$, as the second alternative, is calculated as the Euclidean norm L2 distance between these normalized negative class probabilities in accordance with the following equation:

$$\mathcal{L}_{NCR} = \sum_{k \neq \bar{y},\, k \in K} (\hat{p}_k^T - \hat{p}_k^S)^2, \text{ where}$$

$$\hat{p}_k^{T \text{ or } S} = \frac{\exp{(p_k^{T \text{ or } S})}}{\sum_{k \neq \bar{y}, k \in K} \exp{(p_k^{T \text{ or } S})}} \qquad (4)$$

wherein - k is the total number of classes;

- $p^T$ is the teacher's output and $p^S$ is the student model's predicted logit $\in \mathbb{R}^K$ ; and
- $\bar{y}$ is the pseudo-label.

The aligning module 15 may be implemented as software running on the training apparatus 10 or may be implemented partially or fully as hardware element of the training apparatus 10. In particular, the training apparatus 10 may comprise a program that includes the obtaining module 11, the inputting module 12, the generating module 13, the training module 14 and the aligning module 15. Alternatively and without limitation, the aligning module 15 may be realized as independent program (in particular, beside a program forming the inputting module 12, the obtaining module 11, the generating module 13 and the training module 14).

The steps carried out by the training apparatus 10 are detailed hereinafter with respect to the corresponding training method, an embodiment of which is illustrated in Fig. 2.

Fig. 2 is a flowchart of the training method 20 according to an embodiment of the present invention. The training method 20 is performed for training the transformer model for semi-supervised image segmentation. To this end, the training method 20 comprises a step 21 of obtaining a dataset of unlabeled images $D^u$ and then a step 221 of inputting each unlabeled image $x^T$ into the teacher model T with a weak augmentation. The training method 20 further comprises a step 222 of inputting each unlabeled image $x^S$ into the student model S with a stronger augmentation. The steps 221 and 222 may be performed in parallel.

As described above, each unlabeled image $x^S$ is strongly augmented by modifying the spatial arrangement of its patches. In addition, the training method 20 may comprises a subsequent step wherein the features embeddings derived from the shuffled (rearranged) patches may be shuffled back to their original sequence before being passed to the decoder of the student model. This subsequent reshuffling step is advantageous as preserving the original sequence ensures that the decoder can reconstruct the spatial layout of the features accurately, facilitating the generation of high-quality segmentation masks.

That is, the training method 20 comprises a step 23 of generating a pseudo-label for the strongly augmented unlabeled image $x^S$ based on the weakly augmented unlabeled image $x^T$ using the teacher model T.

The training method 20 further comprises a step 24 of using the pseudo-label to train the student model S comprising the self-attention mechanism incorporating a feature perturbation; and

Finally, the training method 20 further comprises a step 25 of aligning output of the student model S with the pseudo-label. It should be noted that the step 25 may be performed by processing the consistency loss function. As described above, the consistency loss function may be a cross-entropy loss (first alternative) or may be based on a normalized distribution of negative class probabilities from both the teacher model T and the student model (second alternative).

Concerning the second alternative, the step 25 may comprises a subsequent step of calculating the normalized distribution by applying a softmax function over logits of all the negative classes from the corresponding model. In this case, the consistency loss reflects the distance between the normalized distribution of negative class probabilities from the teacher model T and the normalized distribution of negative class probabilities from the student model S.

Optionally, the training method 20 may comprise another step 26, subsequent to the step 25, of verifying the image segmentation of the transformer model by using the labeled dataset $D^L$. In this case, the training apparatus 10 may comprise a verifying module that is configured to perform the step 26 of the training method 20.

The optional step 26 of verifying the image segmentation involves evaluating the performance of the transformer in segmenting images by comparing its predicted segmentation masks with the ground truth annotations provided in a labeled dataset $D^L$. This comparison assesses the accuracy, precision, and overall quality of the transformer model's segmentation outputs, and then provides insights into areas where the transformer model performs well and areas where it may need improvement. Accordingly, the transformer model can be iteratively fine-tuned and its hyper-parameters adjusted.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A method (20) for training a transformer model for semi-supervised image segmentation, the transformer model comprising a teacher model (T) and a student model (S), the method comprising:

   - obtaining a dataset of unlabeled images ($D^u$) and inputting each unlabeled image into the teacher model (T) with a weak augmentation and into the student model (S) with a stronger augmentation;
   - generating a pseudo-label for the strongly augmented unlabeled image based on the weakly augmented unlabeled image using the teacher model (T), and using the pseudo-label to train the student model (S) comprising a self-attention mechanism incorporating a feature perturbation; and
   - aligning output of the student model (S) with the pseudo-label.

2. The method (20) according to claim 1, comprising verifying the image segmentation of the transformer by using a labeled dataset ($D^L$).

3. The method (20) according to claim 1 or 2, wherein each unlabeled image is strongly augmented by modifying the spatial arrangement of its patches.

4. The method (20) according to claim 3, wherein the patches are randomly spatially rearranged.

5. The method (20) according to any of claims 1 to 4, wherein the feature perturbation comprises modifying the student model's attention weights for patches of the strongly augmented unlabeled image with a confidence below a predetermined threshold.

6. The method (20) according to claim 5, wherein the predetermined threshold is set between 0 and 1.

7. The method (20) according to claim 6, wherein the predetermined threshold is set to 0.95.

8. The method (20) according to any of claims 1 to 7, wherein aligning the output of the student model (S) with the pseudo-label comprises processing a consistency loss function.

9. The method (20) according to claim 8, wherein the consistency loss function is a cross-entropy loss or is based on a normalized distribution of negative class probabilities from both the teacher (T) and the student model (S).

10. The method (20) according to claim 9, wherein the normalized distribution is calculated by applying a softmax function over logits of all the negative classes from each model.

11. The method (20) according to claim 9 or 10, wherein the consistency loss reflects the distance between the normalized distribution of negative class probabilities from the teacher model (T) and the normalized distribution of negative class probabilities from the student model (S).

12. The method (20) according to any of claims 1 to 11, wherein the transformer model is a vision transformer or a swin transformer.

13. A computer program set including instructions for executing the steps of the method (20) of any of claims 1 to 12 when said program set is executed by at least one computer.

14. An apparatus (10) for training a transformer model for semi-supervised image segmentation, the transformer model comprising a teacher model (T) and a student model (S), the apparatus (10) comprising:

   - an obtaining module (11) configured to obtain a dataset of unlabeled images (Du) ;
   - an inputting module (12) configured to input each unlabeled image into the teacher model (T) with a weak augmentation and into the student model (S) with a stronger augmentation;
   - a generating module (13) configured to generate a pseudo-label for the strongly augmented unlabeled image based on the weakly augmented unlabeled image using the teacher model (T);

- a training module (14) configured to use the pseudo-label to train the student model (S) comprising a self-attention mechanism incorporating a feature perturbation; and
- an aligning module (15) configured to align output of the student model (S) with the pseudo-label.

**15.** A vehicle (1) comprising an apparatus (10) according to claim 14.

**Amended claims in accordance with Rule 137(2) EPC.**

**1.** A method (20) for training a transformer model for semi-supervised image segmentation, the transformer model comprising a teacher model (T) and a student model (S), the method comprising:

- obtaining (21) a dataset of unlabeled images ($D^u$) and inputting (221) each unlabeled image into the teacher model (T) with a weak augmentation and into the student model (S) with a stronger augmentation (222);
- generating (23) a pseudo-label for the strongly augmented unlabeled image based on the weakly augmented unlabeled image using the teacher model (T),
the method being **characterized in that** it comprises using (24) the pseudo-label to train the student model (S) comprising a self-attention mechanism incorporating a feature perturbation; and
- aligning (25) output of the student model (S) with the pseudo-label.

**2.** The method (20) according to claim 1, comprising verifying (26) the image segmentation of the transformer by using a labeled dataset ($D^L$).

**3.** The method (20) according to claim 1 or 2, wherein each unlabeled image is strongly augmented by modifying the spatial arrangement of its patches.

**4.** The method (20) according to claim 3, wherein the patches are randomly spatially rearranged.

**5.** The method (20) according to any of claims 1 to 4, wherein the feature perturbation comprises modifying the student model's attention weights for patches of the strongly augmented unlabeled image with a confidence below a predetermined threshold.

**6.** The method (20) according to claim 5, wherein the predetermined threshold is set between 0 and 1.

**7.** The method (20) according to claim 6, wherein the predetermined threshold is set to 0.95.

**8.** The method (20) according to any of claims 1 to 7, wherein aligning (25) the output of the student model (S) with the pseudo-label comprises processing a consistency loss function.

**9.** The method (20) according to claim 8, wherein the consistency loss function is a cross-entropy loss or is based on a normalized distribution of negative class probabilities from both the teacher (T) and the student model (S).

**10.** The method (20) according to claim 9, wherein the normalized distribution is calculated by applying a softmax function over logits of all the negative classes from each model.

**11.** The method (20) according to claim 9 or 10, wherein the consistency loss reflects the distance between the normalized distribution of negative class probabilities from the teacher model (T) and the normalized distribution of negative class probabilities from the student model (S).

**12.** The method (20) according to any of claims 1 to 11, wherein the transformer model is a vision transformer or a swin transformer.

**13.** A computer program set including instructions for executing the steps of the method (20) of any of claims 1 to 12 when said program set is executed by at least one computer.

**14.** An apparatus (10) for training a transformer model for semi-supervised image segmentation, the transformer model comprising a teacher model (T) and a student model (S), the apparatus (10) comprising:

- an obtaining module (11) configured to obtain a dataset of unlabeled images ($D^u$) ;

- an inputting module (12) configured to input each unlabeled image into the teacher model (T) with a weak augmentation and into the student model (S) with a stronger augmentation;
- a generating module (13) configured to generate a pseudo-label for the strongly augmented unlabeled image based on the weakly augmented unlabeled image using the teacher model (T);

the apparatus (10) being **characterized in that** it comprises:

- a training module (14) configured to use the pseudo-label to train the student model (S) comprising a self-attention mechanism incorporating a feature perturbation; and
- an aligning module (15) configured to align output of the student model (S) with the pseudo-label.

15. A vehicle (1) comprising an apparatus (10) according to claim 14.

**FIG.1**

**FIG.2**

Europäisches
Patentamt

European
Patent Office

Office européen
des brevets

# EUROPEAN SEARCH REPORT

**Application Number**

EP 24 17 9134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 117 746 267 A (GUANGXI ENVIRONMENTAL PROT INDUSTRY INVESTMENT GROUP CO LTD) 22 March 2024 (2024-03-22) * pages 2-9 * | 1-15 | INV. G06V10/82 |
| Y | KAIHONG WANG ET AL: "Exploring Consistency in Cross-Domain Transformer for Domain Adaptive Semantic Segmentation", ARXIV.ORG, CORNELL UNIVERSITY LIBRARY, 201 OLIN LIBRARY CORNELL UNIVERSITY ITHACA, NY 14853, 27 November 2022 (2022-11-27), XP091379910, * Sections 2 and 3 * | 1-15 | |
| A | CN 117 893 760 A (UNIV SHAANXI SCIENCE & TECH) 16 April 2024 (2024-04-16) * the whole document * | 1-15 | |
| L | HU XINTING ET AL: "Training Vision Transformers for Semi-Supervised Semantic Segmentation", 2024 IEEE/CVF CONFERENCE ON COMPUTER VISION AND PATTERN RECOGNITION (CVPR), IEEE, 16 June 2024 (2024-06-16), pages 4007-4017, XP034695535, DOI: 10.1109/CVPR52733.2024.00384 [retrieved on 2024-09-16] * the whole document * | 1-15 | **TECHNICAL FIELDS SEARCHED (IPC)**<br><br>G06V |

The present search report has been drawn up for all claims

| Place of search | Date of completion of the search | Examiner |
|---|---|---|
| The Hague | 15 November 2024 | Miclea, Sorin |

EPO FORM 1503 03.82 (P04C01)

## ANNEX TO THE EUROPEAN SEARCH REPORT
## ON EUROPEAN PATENT APPLICATION NO.

EP 24 17 9134

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | Publication date |
|---|---|---|---|
| CN 117746267 A | 22-03-2024 | NONE | |
| CN 117893760 A | 16-04-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SANGDOO YN** ; **DONGYOON HAN** ; **SEONG JOON OH** ; **SANGHYUK CHUN** ; **JUNSUK CHOE** ; **YOUNGJOON YOO**. CutMix: Regularization Strategy to Train Strong Classifiers with Localizable Features. *Proceedings of the IEEE/CVF International Conference on Computer Vision (ICCV)*, 2019

- **ASHISH VASWANI** ; **NOAM SHAZEER** ; **NIKI PARMAR** ; **JAKOB USZKOREIT** ; **LLION JONES** ; **AIDAN NGOMEZ** ; **LUKASZ KAISER** ; **ILLIA POLOSUKHIN**. Attention is All you Need. *advances in Neural Information Processing Systems (NeurIPs)*, 2017